# EUROPÄISCHE PATENTSCHRIFT

(11) **EP 0 859 257 B1**
(45) Veröffentlichungstag und Bekanntmachung des Hinweises auf die Patenterteilung: **20.09.2006**
(21) Anmeldenummer: 98400271.7
(22) Anmeldetag: 06.02.1998
(51) Int. Cl.: G02B 6/44

(54) **Anordnung zur Abzweigung an einem mehrere Verseilelemente mit optischen Fasern enthaltenden Fernmeldekabel**
Device for branching a telecommunications cable comprised of a plurality of strands containing optical fibres
Dispositif pour le branchement d'un câble de télécommunications contenant plusieurs éléments de câblage comportant des fibres optiques

(30) Priorität: 14.02.1997 DE 19705648; 14.02.1997 DE 19705649; 12.07.1997 DE 29712349 U
(43) Veröffentlichungstag der Anmeldung: 19.08.1998
(73) Patentinhaber: Nexans Deutschland Industries AG & Co KG., 41238 Mönchengladbach (DE)
(72) Erfinder: Wenski, Wolfgang, Dipl.-Ing., 31737 Rinteln (DE); Teschner, Wolfgang, Ing.grad., 31515 Wunstorf (DE); Grajewski, Franz, Dr.-Ing., 31655 Stadthagen (DE); Stieb, Werner, Dipl.-Ing., 31655 Stadthagen (DE); Freckmann, Hans-Holger, 30855 Langenhagen (DE); Wielgolaski, Zbigniew, Dipl.-Ing., 31655 Stadthagen (DE)
(74) Vertreter: Döring, Roger

(56) Entgegenhaltungen:
- EP-A- 0 260 741
- DE-C- 4 140 701
- DE-U- 29 712 349
- GB-A- 2 295 462
- US-A- 4 234 756
- PATENT ABSTRACTS OF JAPAN vol. 016, no. 522 (P-1445), 27.Oktober 1992 -& JP 04 194806 A (MITSUBISHI CABLE IND LTD), 14.Juli 1992,

## Beschreibung

Die Erfindung betrifft eine vorgefertigte Einheit zur Herstellung einer Abzweigung mit einer Abzweigleitung und zumindest einer Kassette in einem wiederöffenbaren Muffengehäuse.

Die bestehenden faseroptischen Netzwerke der Telekomgesellschaften bestehen in der Mehrzahl aus "Punkt-zu-Punkt" Verbindungen, sofern kein Zugriff zu einzelnen Lichtwellenleitern notwendig ist. Neue Anbieter auf dem Telekommunikationsmarkt z. B. Versorgungsunternehmen, Eisenbahngesellschaften, Stadtwerke etc. benötigen jedoch einen Zugang zu einzelnen Lichwellenleitern, da zum Zeitpunkt der Verlegung der Kabel nicht bekannt ist, wann und wo nach der Verlegung ein weiterer Teilnehmer angeschlossen werden muß. Es muß deshalb eine Möglichkeit geschaffen werden, nach der Verlegung des Kabels einen Zugriff zu einem einzelnen Lichtwellenleiter zu erhalten, ohne daß ein anderer Lichtwellenleiter, der schon aktiv ist, d. h. über den schon Informationen übertragen werden, beeinträchtigt wird.

Die Architektur derartiger Netze ist im Normalfall eine Ringstruktur, die nicht notwendigerweise geschlossen sein muß. Das bedeutet, daß die Lichtwellenleiter am Ort oder in der Nähe des Teilnehmers zur Schleife geschaltet sind.

Für den Zugriff zu den einzelnen Lichtwellenleitern ist von der Firma Raychem eine Muffe entwickelt worden, die unter den Handelsnamen FIST auf dem Markt erhältlich ist.

Bei dieser Muffe wird in einem ersten Fall das Kabel durchtrennt, der Kabelmantel sowie das ggfs vorhandene Zentralelement über eine bestimmte Länge entfernt und die Lichtwellenleiter der beiden Kabel sowie die Kabelenden werden durch Öffnungen im Bodenteil der als Haubenmuffe ausgebildeten Muffe hindurchgeführt. Die Lichtwellenleiter werden miteinander verspleißt und einzeln in Kassetten abgelegt. Falls bei der Herstellung der Muffe bereits ein oder mehrere Teilnehmer angeschlossen werden sollen, werden die für den Anschluß vorgesehenen Lichtwellenleiter mit den Lichtwellenleitern des Teilnehmerkabels verspleißt. Die durch das Bodenteil eingeführten Kabel werden in den Öffnungen dauerhaft abgedichtet.

Nach einer anderen Lösung werden Mantel und Zentralelement über eine bestimmte Länge entfernt und die Lichtwellenleiter durch eine ovale Öffnung im Bodenteil der Haubenmuffe ungeschnitten eingeführt. Dazu ist es erforderlich, die Lichtwellenleiter zu biegen, wobei es zu einem Bruch der empfindlichen Lichtwellenleiter kommen kann. Auch hier werden die Überlängen der einzelnen Lichtwellenleiter in gesonderten Kassetten abgelegt.

Bei beiden Lösungen ist es erforderlich, daß jeder freigelegte Lichtwellenleiter an der Montagestelle in ein Kunststoffröhrchen eingefädelt werden muß, um ihn gegen mechanische Beschädigungen zu schützen. Dies ist ein zeitaufweniger Arbeitsgang, der die Herstellung einer Muffe an der Montagestelle erheblich verteuert. Ein weiterer Nachteil dieser Muffen ist, daß sie nur bei der Erstinstallation des Kabels eingebaut werden können, ein späterer Einbau ist nicht möglich.

Der vorliegenden Erfindung liegt die Aufgabe zugrunde, eine vorgefertigte Einheit anzugeben, mit deren Hilfe in wesentlich kürzerer Zeit eine Abzweigung an einem optischen Fernmeldekabel hergestellt werden kann und die auch an einem bereits verlegten optischen Fernmeldekabel installiert werden kann. Weiterhin soll die vorgefertigte Einheit ermöglichen, in einfacher Weise neue Teilnehmer an das optische Fernmeldekabel anzuschließen.

Diese Aufgabe wird durch die Merkmale Anspruchs 1 gelöst.

Das Wesentliche der Erfindung besteht darin, daß eine erste Muffe vorgesehen ist, die eine Abzweigverbindung für zumindest ein Verseilelement umgibt. Bei dieser ersten Muffe handelt es sich um eine herkömmliche Muffe mit einer Vielzahl von Spleißträgern für die verspleißten Lichtwellenleiter, wie sie z. B aus der EP 0 490 133 A bekannt ist. Diese Muffe muß nicht wiederöffenbar sein und kann von daher in der Erde geschützt verlegt sein.

Die zweite Muffe ist eine werksseitig vormontierte Muffe, die dafür vorgesehen ist, daß sie jederzeit geöffnet werden kann. Die Muffe umschließt eine Vielzahl von leicht zugänglichen Kassetten. Jede Kassette enthält eine bestimmte Vorratslänge eines Lichtwellenleiters. Außerhalb der Kassette sind die Enden des Lichtwellenleiters in einem Kunststoffschutzröhrchen geführt. Mehrere solcher Kunststoffschutzröhrchen sind gebündelt und mehrere solcher Bündel sind in einem Kunststoffrohr geführt. Die genannten Elemente sind zu einer Einheit vorgefertigt, so daß an der Montagestelle lediglich die einzelnen Lichtwellenleiter mit den entsprechenden Lichtwellenleitern der abzuzweigenden Verseilelemente durch konventionelle Spleißung verbunden werden müssen und 8 bis 12 Spleiße in einer Kassette abgelegt werden. Die aus der Muffe herausragende Länge der mit den Lichtwellenleitern bestückten Kunststoffrohrchen ist so groß, daß die Muffe in einer entsprechend großen Entfernung vom Kabel abgelegt werden kann. Die zweite Muffe - in der Regel ist dies eine Haubenmuffe - kann in einem Behälter aus z. B. Beton untergebracht werden.

Das aus dem Kunststoffrohr mit den Bündeln bestehende "Kabel" sollte in einer Länge von ca. 2,5 m in dem Behälter untergebracht werden, damit die Muffe zum Zwecke des Anschließens eines neuen Teilnehmers aus dem Behalter entnommen werden kann.

Weitere vorteilhafte Ausgestaltungen der Erfindung sind in den Unteransprüchen erfaßt.

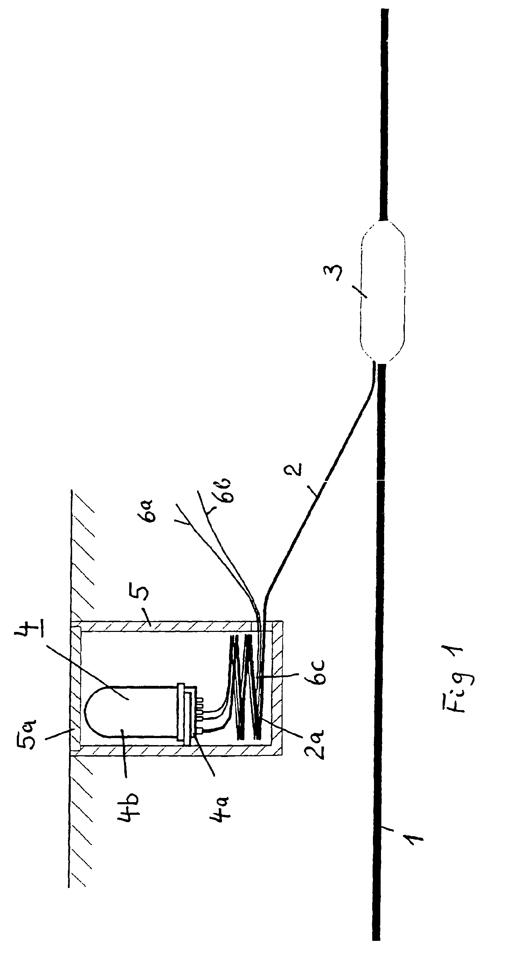

Die Erfindung ist anhand der in den Figuren 1 bis 5 schematisch dargestellten Ausführungsbeispiele näher erläutert.

In der Figur 1 ist ein Hauptkabel 1 üblicherweise ein Standardkabel mit 144 Fasern dargestellt, von welchem ein Teil der Fasern z. B. 24 oder 48 abgezweigt werden sollen. Dieser Abzweig kann entweder zwischen zwei Kabellängen von jeweils zwei bis drei Kilometer Länge, während der Verlegung oder an einem bereits verlegten Kabel in kürzeren Abständen angebracht werden. In den beiden erstgenannten Fällen werden die nicht abgezweigten Fasern verspleißt und 8 bis 12 Spleiße in einer Kassette abgelegt. Die abzuzweigenden Fasern werden an die Fasern eines Abzweigkanals 2 angespleißt. Die Abzweigstelle wird anschließend mit einer Muffe 3 geschützt.

Diese Muffe 3 muß in der Regel nicht wieder geöffnet werden Es kann deshalb eine Muffe verwendet werden, wie sie z. B. aus der EP 0 490 133 A bekannt ist

In einem drittgenannten Fall wird das Hauptkabel 1 freigelegt, der Mantel über eine bestimmte Länge entfernt, die abzuzweigenden Fasern freigelegt und mittels konventioneller Spleißung an die Fasern des Abzweigkabels 2 angespleißt. Anschließend wird wie in den erstgenannten Fällen die Abzweigstelle durch die Muffe 3 geschützt und vergraben.

Bei dem Abzweigkabel 2 handelt es sich um einen Kunststoffschlauch, in welchem mehrere Bündel aus einzelnen Kunststoffröhrchen untergebracht sind. Jedes Kunststoffröhrchen enthält einen ungeschnittenen Lichtwellenleiter. Das Abzweigkabel 2 ist durch das Bodenteil 4a einer Haubenmuffe 4 mit einer abnehmbaren Haube 4b abgedichtet eingeführt. Sämtliche Öffnungen im Bodenteil 4b sind kreisrunde Öffnungen, so daß die bei ovalen Öffnungen möglichen Probleme bei der Abdichtung nicht auftreten können Im Innern der Haubenmuffe 4 sind eine Vielzahl von nichtdargestellten Kassetten angeordnet, die jede für sich gesondert zugänglich ist.

Die Haubenmuffe 4 ist im Abstand zur Abzweigmuffe 3 in einem Unterflurbehälter 5 untergebracht, der mit einem abnehmbaren, jedoch vorzugsweise abschließbaren Deckel 5a versehen ist.

Am Boden des Unterflurbehälters 5 sind ein oder mehrere Windungen 2a des Abzweigkabels 2 untergebracht, damit für den Fall einer Montage die Haubenmuffe 4 aus dem Behälter 5 entnommen werden kann.

Abzweigkabel 2 und Haubenmuffe 4 bilden eine werksseitig vormontierte Einheit. Sollen z. B. zwei neue Teilnehmer an das Hauptkabel 1 bzw. das Netz angeschlossen werden, werden die Lichtwellenleiter der Teilnehmerkabel 6a und 6b an die entsprechenden Lichtwellenleiter in der Haubenmuffe 4 angeschlossen. Auch die Teilnehmerkabel 6a und 6b liegen in mehreren Windungen 6c als Vorratslange am Boden des Behälters 5. Da sowohl das Abzweigkabel 2 wegen des fehlenden Zentralelementes und anderer Zugentlastungselemente als auch die Teilnehmerkabel 6a und 6b wegen ihres geringen Durchmessers äußerst biegbar sind, sind die Windungsdurchmesser der Vorratslängen 6c und 2a ebenfalls sehr gering. Dies führt zu äußerst geringen Kosten fiir den Behälter 5 sowie dessen Einbau.

Sollen beispielsweise zwei neue Teilnehmer an das Netz angeschlossen werden, wird der Deckel 5a abgenommen, die Haubenmuffe 4 herausgenommen, die Haube 4b entfernt und die gewünschten Kassetten zugänglich gemacht. In an sich bekannter Weise können dann die Teilnehmerkabel 6a + 6b mittels bekannter Spleißtechnik an die gewünschte Faser angeschlossen werden. Die durch den Boden 4a herausgeführte Teilnehmerkabel 6a + 6b werden gegenüber dem Boden 4a abgedichtet. Desgleichen wird das Kabel 2 gegenüber der Öffnung im Boden 4a abgedichtet. Da alle Öffnungen im Boden 4a kreisrund sind und die hereingeführten und herausgeführten Kabel 2 und 6a + 6b ebenfalls kreisrund sind, bereitet die Abdichtung keine Schwierigkeiten.

In einem Kabel 1 für den genannten Zweck beträgt die Anzahl der Lichtwellenleiter z. B. 144, in einigen Fällen bis zu 192. Jeweils 12 Lichtwellenleiter sind in einem Verseilelement zusammengefaßt. Ein Verseilelement ist z. B. ein Kunststoffröhrchen, in welchem die 12 Lichtwellenleiter untergebracht sind. Für jeden Lichtwellenleiter des abzuzweigenden Verseilelements ist ein Lichtwellenleiter und eine Kassette in der Haubenmuffe 4 vorgesehen. Bei der werksseitigen Vormontage der Haubenmuffe 4 wird ein Lichtwellenleiter von einem Kunststoffröhrchen mit einem Außendurchmesser von z B. 0,9 mm umgeben. Von einem so hergestellten Element werden z. B. Längen von 15 m abgetrennt. Aus der Mitte einer solchen Länge wird das Kunststoffröhrchen über eine Länge von ca. 2,5 m entfernt. Die freigelegte Länge des Lichtwellenleiters wird in einer Kassette abgelegt und dabei die Enden des Kunststoffröhrchens am Eingang der Kassette festgelegt Mehrere, z. B. 2 x 12 solcher Kassetten werden vorbereitet. Die aus den Kassetten austretenden Kunststoffröhrchen werden zu zwei Bündeln geformt und mit unterschiedlich gefärbten Bändern umwickelt. Die zwei Bündel werden in einen Kunststoffwellschlauch eingefiihrt, der durch eine Öffnung im Bodenteil 4b der Haubenmuffe 4 hindurch gerührt und abgedichtet wird Die Kassetten werden gestapelt und die Haube 4b flüssigkeitsdicht mit dem Bodenteil 4a verbunden. Der zwischen den Bündeln und dem Kunststoffwellschlauch befindliche Raum ist zwecks Vermeidung einer Längswasserwanderung wie in der Kabeltechnik üblich abgedichtet.

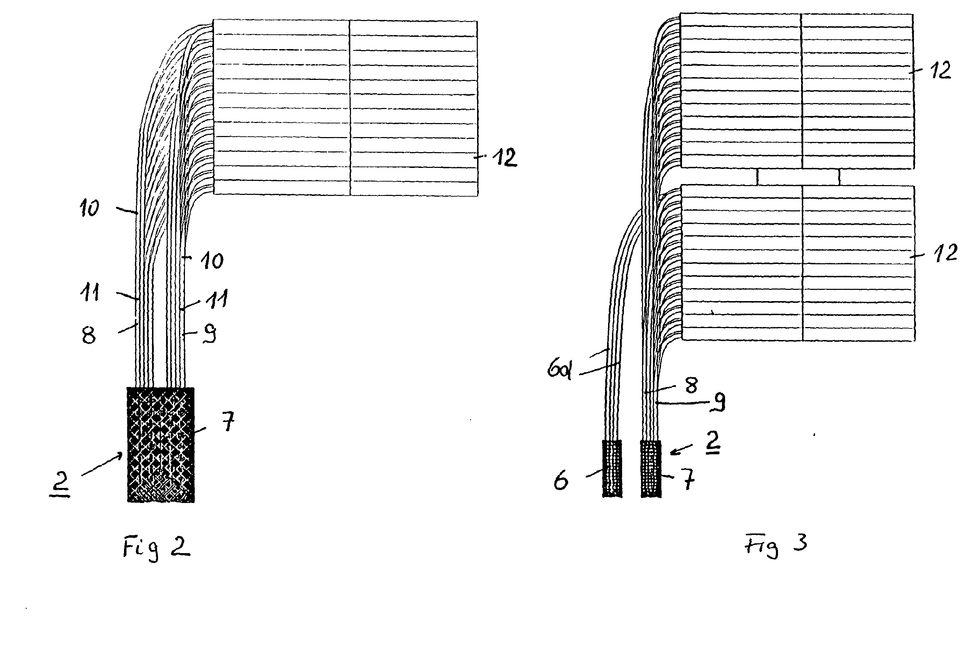

Figur 2 zeigt das Abzweigkabel 2 mit seinem Kunststoffschlauch 7, vorzugsweise ein Kunststoffwellschlauch sowie den Bundeln 8 und 9. Jedes Bündel 8, 9 besteht aus mehreren Kunststoffröhrchen 10, die Mittels eines Fadens oder Bandes 11 zuammengehalten sind. Aus Gründen der Identifikation der Bündel 8 und 9 sind die Fäden oder Bänder 11 unterschiedlich eingefärbt. Die einzelnen Kunststoffröhrchen 10 sind jeder für sich in eine Kassette 12 herein- und wieder herausgeführt, d. h in jeder Kassette 12 befindet sich ein Lichtwellenleiter mit einer bestimmten Vorratslänge. Die Kassetten 12 bilden einen Stapel, der in der Haubenmuffe 4 untergebracht ist. Jede Kassette 12 ist für sich gesondert zugänglich, so daß ohne Beeinträchtigung anderer Teilnehmer ein neuer Anschluß erstellt werden kann.

In Figur 3 ist ein aus einer größeren Anzahl von Kassetten 12 bestehender Stapel dargestellt. Darüber hinaus zeigt die Figur 3, daß die Adern 6d eines Teilnehmerkabels 6 an die Lichtwellenleiter angeschlossen sind

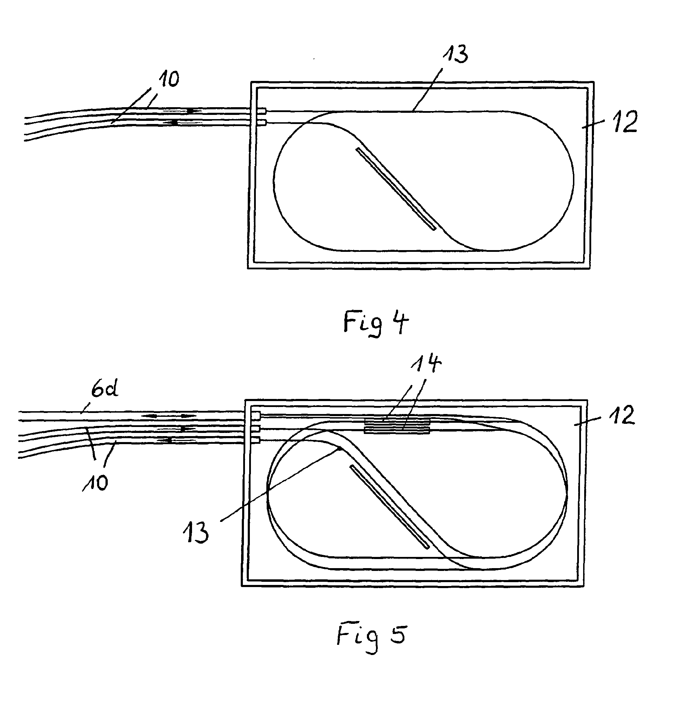

Figur 4 stellt eine Kassette 12 dar, in welche das Kunststoffröhrchen 10 herein- und herausgeführt ist. Im Innern der Kassette 12 liegt der Lichtwellenleiter 13 frei und legt sich an den Rand der Kassette 12 an Die Vorratslänge des Lichtwellenleiters 13 im Innern der Kassette 12 beträgt in etwa 2,5 m.

Zur Herstellung der aus Kassette 12, Kunststoffröhrchen 10 und Lichtwellenleiter 13 bestehenden Einheit wird werksseitig zunächst eine Länge von ca. 15 m eines einen Lichtwellenleiter 13, enthaltenden Kunststoffröhrchens 10 von einer Vorratslänge abgetrennt. In der Mitte der 15 m Länge wird das Kunststoffröhrchen 10 über eine Länge von 2,5 entfernt und der freigelegte Lichtwellenleiter 13 in der Kassette 12 abgelegt.

Die einzelnen herein- und herausgefiihrten Kunststoffröhrchen 10 werden dann werkseitig zu den Bündeln 8 und 9 zusammengefaßt mit den Bändern oder Fäden 11 umwickelt und in den Kunststofiwellschlauch 7 eingefädelt Der zwischen den Bündeln 8 und 9 und dem Kunststoffwellschlauch 7 befindliche Raum wird zur Vermeidung einer Längswasserwanderung wie aus der Kabeltechnik an sich bekannt abgedichtet Der Kunststoffwellschlauch 7 wird dann durch eine Öffnung im Bodenteil 4a der Haubenmuffe 4 hindurchgesteckt und abgedichtet. Nach dem Ablegen der Kassetten 12 im nicht dargestellten Gestell der Haubenmuffe 4 wird die Haube 4b aufgesetzt. Damit ist die vorfabrizierte Muffe mit Kassetten 12, in welchen jeweils ein Lichtwellenleiter 13 abgelegt ist, einsatzbereit.

Die Figur 5 zeigt eine Kassette 12, in welcher eine Ader 6d eines Teilnehmerkabels 6 mit seinen Lichtwellenleitern mittels eines Spleißverbinders 14 in den Lichtwellenleiter 13 eingespleißt ist.

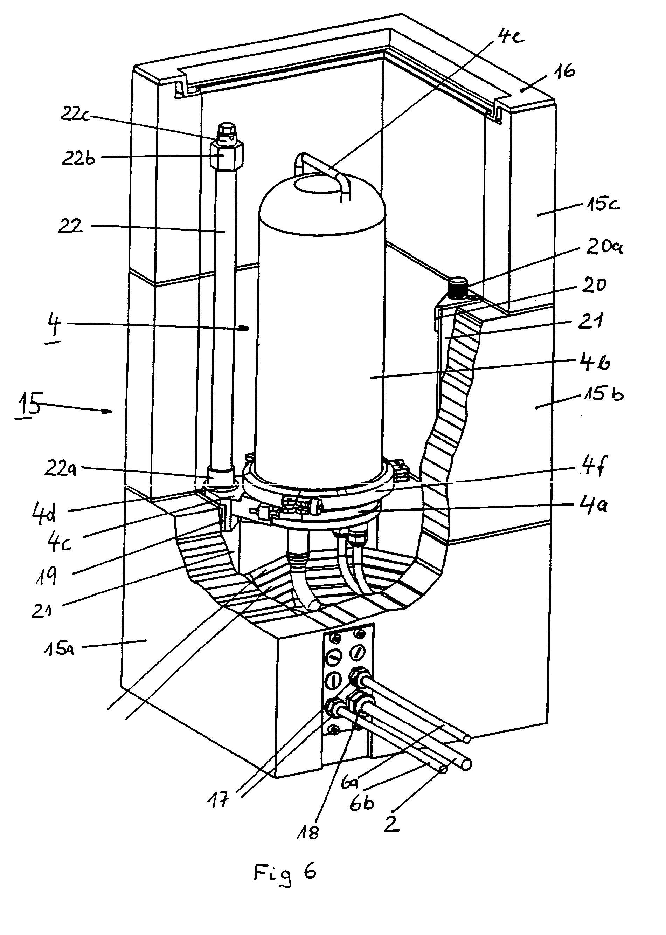

Figur 6 zeigt einen Unterflurbehälter mit einem dort untergebrachten Mufengehäuse.

Der Unterflurbehälter besteht aus einem äußeren Gehäuse 15, z. B. aus Beton, welches aus einem wannenförmigen Bodenteil 15a sowie mehreren auf dem Bodenteil 15a aufliegenden Segmenten 15b und 15c aufgebaut ist. Auf dem Segment 15c liegt ein Deckel 16, z. B. aus Grauguß auf.

Die ein- und ausgehenden Kabel 2 und 6a,6b, vorzugsweise Lichtwellenleiterkabel, sind durch nicht bezeichnete Bohrungen in das Bodenteil 15a geführt und durch Kabelverschraubungen 17 und 18 festgelegt und abgedichtet

Die Muffe 4 weist an ihrem Bodenteil 4a einen Ansatz 4c auf, in welchem eine Bohrung 4d vorgesehen ist.

An der Innenwandung des Behälters 15 sind an gegenüberliegenden Seiten und in unterschiedlicher Hohe zwei Halterungen 19 und 20 befestigt, die auf Auflagern 21 aufliegen und dort festgeschraubt sind. Die Halterungen 19 und 20 weisen jeder einen Zapfen 19a und 20a auf.

Im Normalzustand lagert die Muffe 4 auf der Halterung 19 Hierzu ist der Zapfen 19a, der in der Figur überdeckt ist, durch die Bohrung 4d hindurchgeführt. Mit einem Stab 22, der an seinem unteren Ende eine Hülse 22a aufweist, wird die Muffe 4 befestigt, indem eine formschlüssige Verbindung zwischen dem Zapfen 19a und der Hülse 22a z. B. durch Verschrauben bzw. mittels eine Bajonettverschlusses hergestellt wird. Zum erleichterten Befestigen oder Lösen der Verbindung weist der Stab 22 an seinem oberen Ende einen Sechskant 22b auf

Für den Fall, daß Montagearbeiten an der Muffe 4 vorgenommen werden müssen, wird die Verbindung zwischen Stab 22 und Halterung 19 durch Drehen des Stabes 22 gelöst, die Muffe 4 aus dem Gehäuse 15 herausgenommen, wobei die Muffe 4 entgegen dem Wicklungssinn der Windungen 6c gedreht wird.

Der Stab 22 wird mit seiner Hülse 22a auf die hoher gelegene Halterung 20 aufgesteckt und befestigt, die Muffe 4 mit ihrem Ansatz 4c bzw. der Bohrung 4d auf das zylindrische Ende 22c des Stabes 22 aufgesetzt und dort in an sich bekannter Weise befestigt.

Um das Herausheben der Muffe 4 zu erleichtern, besitzt die Muffe 4 am oberen Ende der Haube 4b einen Griff bzw. eine Griffmulde 4e

Durch Lösen des Spannbandes 4f, welches Fußteil 4a und Haube 4b druckdicht verbindet, kann die Haube 4b abgenommen werden, wodurch die nicht dargestellte Kassetten zugänglich gemacht werden.

Nach Beendigung der Montagearbeiten wird die Haube 4b auf das Fußteil 4a aufgesetzt und das Spannband 4f herumgelegt und festgezogen. Danach wird der Stab 22 von der Halterung 20 gelöst, die Muffe 4 angehoben und in das Gehäuseinnere abgesenkt und dabei in Richtung des Wicklungssinnes der Kabelwindungen 6c gedreht und auf die untere Halterung 19 aufgesteckt. Abschließend erfolgt die Befestigung mit dem Stab 22.

Zum Schluß wird der Deckel 16 auf das Gehäuse 15 aufgelegt.

## Patentansprüche

1. Vorgefertigte Einheit mit einer Abzweigleitung (2) und zumindest einer Kassette (12) in einem wiederöffenbaren Muffengehäuse (4) zur Herstellung einer Abzweigung an einem mehrere Verseilelemente mit optischen Fasern enthaltenden Fernmeldekabel (1), wobei mindestens ein Verseilelement durchtrennt wird, die Lichtwellenleiter des Verseilelementes an die Lichtwellenleiter (13) der Abzweigleitung (2) angespleißt werden und die Abzweigstelle durch eine Muffe (3) geschützt wird, bei welcher die Abzweigleitung (2) aus einer Vielzahl von Lichtwellenleitern (13) besteht, die jeder für sich in einem Kunststoffröhrchen (10) lose angeordnet sind, daß das Kunststoffröhrchen (10) von den Lichtwellenleitern (13) ungefähr in der Mitte über eine bestimmte Länge entfernt ist und jeder von den Kunststoffröhrchen (10) befreite Lichtwellenleiter (13) in einer Kassette (12) abgelegt ist und das Muffengehäuse (4) in einem Behälter (5) untergebracht ist, bei der mehrere der außerhalb der Kassette (12) befindlichen Lichtwellenleiterelemente zu einem Bündel (8,9) vereinigt sind und die Bündel (8,9) von einem Schutzschlauch (7) umgeben sind.

2. Anordnung nach Anspruch 1, **dadurch gekennzeichnet, daß** jedes Bündel (8,9) mit einem Band oder Faden (1 1) wendelartig umwickelt ist.

3. Anordnung nach Anspruch 2, **dadurch gekennzeichnet, daß** die Bänder oder Fäden (11) zur Identifizierung der Bündel (8,9) unterschiedlich eingefärbt sind.

4. Anordnung nach einem der Ansprüche 1 bis 3, **dadurch gekennzeichnet, daß** der Schutzschlauch (7) ein gewelltes Kunststoffrohr ist.

5. Anordnung nach einem der Ansprüche 1 bis 4, **dadurch gekennzeichnet, daß** der Behälter (5), in dem das Muffengehäuse (4) untergebracht ist, ein Unterflurbehälter ist.

6. Anordnung nach einem der Ansprüche 1 bis 5, **dadurch gekennzeichnet, daß** die Muffe (3) für die Abzweigstelle vergraben ist.

7. Anordnung nach einem der Ansprüche 1 bis 6, **dadurch gekennzeichnet, daß** das Muffengehäuse (4) werkseitig derart vorkonfektioniert ist, daß die Enden der Lichtwellenleiter (13) durch konventionelles Spleißen an die aus dem optischen Kabel (1) abzuzweigenden Lichtwellenleiter anschließbar sind.

8. Anordnung nach einem der Ansprüche 1 bis 7, **dadurch gekennzeichnet, daß** der zwischen den Bündeln (8,9) und dem Schutzrohr (7) befindliche Zwischenraum gegen Längswasserwanderung abgedichtet ist.

9. Anordnung nach einem der Ansprüche 1 bis 8, **dadurch gekennzeichnet, daß** die Länge der aus dem Muffengehäuse (4) herausragenden Lichtwellenleiter (13) bzw. die Länge des Schutzrohres (7) mindestens 5 m beträgt.

10. Anordnung nach einem der Ansprüche 1 bis 9, **dadurch gekennzeichnet, daß** das Muffengehäuse eine Haubenmuffe (4) ist, in deren Bodenteil (4a) mehrere Öffnungen vorgesehen sind, durch eines von denen das Schutzrohr (7) eingeführt ist und welche zum Einführen von Anschlußkabeln (6) zu den Abnehmern vorgesehen sind.

11. Anordnung nach einem der Ansprüche 1 bis 10, **dadurch gekennzeichnet, daß** die Öffnungen im Bodenteil (4a) des Muffengehäuses (4) einen kreisrunden Querschnitt aufweisen.

12. Anordnung nach einem der Ansprüche 1 bis 11, **dadurch gekennzeichnet, daß** jeder Lichtwellenleiter (13) eine Länge von ca. 10 bis 15 m aufweist und daß sich von jedem Ende des Lichtwellenleiters (13) ein Kunststoffröhrchen (10) von 4 bis 6 m Länge erstreckt.

## Claims

1. Prefabricated unit with a branch line (2) and at least one cartridge (12) in a re-openable bush housing (4) for the manufacture of a branching at a telecommunication cable (1) containing several stranded elements with optical fibers, wherein at least one stranded element is separated, the fiber optic cables of the stranded element are spliced onto the fiber optic cables (13) of the branch line (2), and the branch location is protected by a bush (3), in which the branch line (2) consists of a multitude of fiber optic cables (13), which are each loosely arranged in a plastic tube (10) apart, from one another so that the plastic tube (10) is at a certain distance from the fiber optic cables (13) approximately at the center, and each of the fiber optic cables (13) that are separated from the plastic tubes (10) is deposited in a cartridge (12), and the bush housing (4) is facilitated in a container (5), in which several of the fiber optic cables located on the outside of the cartridge (12) are combined into a bundle (8, 9), and the bundles (8, 9) are surrounded by a casing (7).

2. Arrangement according to claim 1, **characterized in that** each bundle (8, 9) is wrapped with a ribbon or thread (11) in a coil-like fashion.

3. Arrangement according to claim 2, **characterized in that** the ribbons or threads (11) are dyed differently for the identification of the bundles (8, 9).

4. Arrangement according to one of the claims 1 to 3, **characterized in that** the casing (7) is a corrugated plastic tube.

5. Arrangement according to one of the claims 1 to 4, **characterized in that** the container (5), in which the bush housing (4) is facilitated, is an underground container.

6. Arrangement according to one of the claims 1 to 5, **characterized in that** the bush (3) for the branch line is buried.

7. Arrangement according to one of the claims 1 to 6, **characterized in that** the bush housing (4) is pre-assembled by the factory in such a manner that the ends of the fiber optic cables (13) can be connected to the fiber optic cables to be branched from the optical cable (1) by means of conventional splicing.

8. Arrangement according to one of the claims 1 to 7, **characterized in that** the clearance between the bundles (8, 9) and the casing (7) is sealed against longitudinal water migration.

9. Arrangement according to one of the claims 1 to 8, **characterized in that** the length of the fiber optic cables (13) protruding from the bush housing (4), or the length of the casing (7), respectively, is at least 5 m.

10. Arrangement according to one of the claims 1 to 9, **characterized in that** the bush housing is a bonnet bushing (4), in the bottom portion (4a) of which several orifices are provided, through one of which the casing (7) is inserted, and which are provided for the insertion of connecting cables (6) going to the consumers.

11. Arrangement according to one of the claims 1. to 10, **characterized in that** the orifices in the bottom portion (4a) of the bush housing (4) have a circular cross sectional area.

12. Arrangement according to one of the claims 1 to 11, **characterized in that** each fiber optic cable (13) has a length of approximately 10 to 15 m, and that a 4 to 6 m long plastic tube (10) extends from each end of the fiber optic cable (13).

## Revendications

1. Unité préconfectionnée avec une câble de dérivation (2) et au moins une cassette (12), dans une tétine (4) réouvrable, pour la réalisation d'une dérivation sur un câble de télécommunication (1) contenant plusieurs éléments de câblage à fibres optiques, un élément de câblage au moins étant traversé, les câbles à fibres optiques de l'élément de câblage étant épissure sur le câble à fibres optiques (13) du câble de dérivation (2), et les points de dérivation étant protégés par un manchon (3), le câble de dérivation (2) étant constitué de nombreux câbles à fibres optiques (13) dont chacun est disposé libre dans un petit tube en plastique (10), **caractérisée en ce que** le petit tube en plastique (10) des câbles à fibres optiques (13) est retiré, sensiblement au centre, sur une distance définie et que chaque câble à fibres optiques (13) sorti du petit tube en plastique (10) est déposé dans une cassette (12) et que la tétine (4) est logée dans un boîtier (5), et **en ce que** les éléments de câbles à fibres optiques se trouvant à l'extérieur de la cassette (12) sont réunis en un faisceau (8, 9) et les faisceaux (8, 9) sont entourés d'une gaine de protection (7).

2. Agencement selon la revendication 1, **caractérisé en ce que** chaque faisceau (8, 9) est enroulé en hélice par un ruban ou des fils (11).

3. Agencement selon la revendication 2, **caractérisé en ce que** les rubans ou les fils (11) sont de différentes couleurs pour l'identification des faisceaux (8, 9).

4. Agencement selon l'une quelconque des revendications 1 à 3, **caractérisé en ce que** la gaine de protection (7) est un tube de plastique ondulé.

5. Agencement selon l'une quelconque des revendications 1 à 4, **caractérisé en ce que** le boîtier (5) dans lequel est logé la tétine (4) est un boîtier souterrain.

6. Agencement selon l'une quelconque des revendications 1 à 5, **caractérisé en ce que** le manchon (3) pour le point de dérivation est enterré.

7. Agencement selon l'une quelconque des revendications 1 à 6, **caractérisé en ce que** la tétine (4) est préconfectionnée en usine de sorte que les extrémités des câbles à fibres optiques (13) sont raccordables aux fibres optiques à dériver du câble optique (1), par un épissurage conventionnel.

8. Agencement selon l'une quelconque des revendications 1 à 7, **caractérisé en ce que** l'espace intercalaire situé entre les faisceaux (8, 9) et le tube de protection (7) est rendu étanche à l'écoulement longitudinal de l'eau.

9. Agencement selon l'une quelconque des revendications 1 à 8, **caractérisé en ce que** la longueur des câble à fibres optiques (13) saillant de la tétine (4) ou la longueur du tube de protection (7) mesure au moins 5 m.

10. Agencement selon l'une quelconque des revendications 1 à 9, **caractérisé en ce que** la tétine est une tétine en calotte, dans l'embase (4a) de sont prévues des ouvertures, le tube de protection (7) étant introduit à travers l'une d'elles, et qui sont destinées à l'introduction de câbles de raccordement (6) aux clients.

11. Agencement selon l'une quelconque des revendications 1 à 10, **caractérisé en ce que** les ouvertures dans l'embase (4a) de la tétine (4) présentent une section circulaire.

12. Agencement selon l'une quelconque des revendications 1 à 11, **caractérisé en ce que** chaque câble à fibres optiques (13) présente une longueur d'environ 10 à 15 m et que depuis chaque extrémité du câble à fibres optiques (13) s'étend un petit tube en plastique (10) de 4 à 6 m de long.
